# EUROPEAN PATENT APPLICATION

(11) **EP 0 544 424 A1**
(43) Date of publication of application: **02.06.1993**
(21) Application number: 92310302.2
(22) Date of filing: 11.11.1992
(51) Int. Cl.: G01P 13/04, G01P 3/36

(54) **Apparatus for detecting movement**

(30) Priority: 27.11.1991 GB 9125267
(71) Applicant: LUCAS INDUSTRIES PUBLIC LIMITED COMPANY, Solihull, West Midlands B91 3TX (GB)
(72) Inventor: Sakai, Izumi, Dr., Shirley, Solihull, West Midlands B90 2RV (GB)
(74) Representative: Robinson, John Stuart

(57) **Abstract**

An apparatus suitable for measuring speed over ground comprises a sensor (1-7) arranged to provide a pulse for each increment of movement relative to the ground (13). Discrimination means (9-11) is provided to discriminate between forward and reverse movement of the sensor (3) relative to the ground (13). An up/down counter (8) counts pulses from the sensor (1-7) in a direction determined by the discrimination means (9-11) and is regularly reset by a control logic circuit (12) to provide an indication of speed.

## Description

The present invention relates to an apparatus for detecting movement. Such an apparatus may be used for detecting or measuring displacement or speed. For instance, such an apparatus may be used for detecting speed with respect to the ground ("speed over ground") of a vehicle.

A known type of speed over ground measuring apparatus comprises a linear array of opto-electric transducers arranged parallel to the longitudinal axis of a vehicle and provided with an optical imaging system for imaging light from the ground onto the transducers. The outputs of alternate transducers are summed to provide a first sum and the outputs of the other transducers are summed to provide a second sum. A differential amplifier or the like forms the difference between the first and second sums so as to provide a signal of substantially sinusoidal form whose fundamental frequency is proportional to the speed of the vehicle over the ground. The speed measurements thus obtained may be used merely for indicating vehicle speed or may be used in vehicle control systems, such as anti-lock braking systems and traction control systems.

Although such speed over ground measuring apparatuses provide accurate measurements of the speed of the vehicle over the ground, problems can occur when the vehicle is stationary. If the sensor is subjected to longitudinal vibration, for instance caused by vibration of an engine of the vehicle, the sensor may produce a signal indicative of relative speed despite the fact that the vehicle is stationary. This can result in incorrect speed indications and can give rise to undesirable operation of control systems of the vehicle.

Similar problems can occur in other situations. For instance, in the case where a fixed sensor is used to monitor the relative speed of a moving object such as a conveyor belt, vibration or oscillation of a stationary belt can give rise to erroneous measurements of speed.

According to the invention, there is provided an apparatus for detecting movement, comprising a sensor for providing a pulse for each increment of movement of the sensor relative to an object, means for discriminating between forward and reverse movement of the sensor relative to the object, and first means for forming the difference between the number of pulses from the sensor corresponding to forward movement and the number of pulses from the sensor corresponding to reverse movement.

Such an apparatus may be used for measuring displacement relative to the object, in which case the first means continuously forms the difference between the numbers of forward and reverse pulses unless and until it is reset. Such apparatus may also be used to measure the speed of the sensor relative to the object, in which case frequency measuring means is provided for measuring the frequency of the output of the first means.

The first means may comprise an up/down counter for counting pulses from the sensor in a direction determined by the discriminating means. Such an arrangement may be used to provide a measure of displacement. Means may be provided for periodically resetting the counter, in which case the count of the counter before each resetting provides a measure of speed.

Alternatively the first means may comprise a monostable arranged to receive pulses from the sensor and an integrator for integrating output pulses of the monostable in a sense determined by the discriminating means. The integrator may comprise a first integrator for integrating monostable output pulses corresponding to forward movement, a second integrator for integrating monostable output pulses corresponding to reverse movement, and a subtractor for forming a difference between outputs of the first and second integrators. Alternatively the polarity of the monostable output pulses may be determined in response to an output of the discriminating means. Preferably the integrator is provided with a discharge path.

In a further alternative, the period of the pulses from the sensor may be used to indicate speed, for example, by controlling a counter arranged to count pulses from a clock. The output of the counter is proportional to the period of the pulses and inversely proportional to the speed of the sensor relative to the object. The direction of the counter may be controlled by the discriminating means.

The sensor may comprise a linear sensor responsive to translational movement relative to the object or a curved sensor sensitive to rotary movement relative to the object.

The object may be fixed so that the apparatus detects movement of the sensor, for instance in order to provide a speed over ground movement detecting apparatus for a vehicle. Alternatively, the sensor may be fixed so as to detect movement of an object, for instance to detect speed or displacement of a conveyor or objects on a conveyor.

The sensor may be a one dimensional array of transducers sensitive to energy received from the object. For instance, the transducers may be opto-electric transducers sensitive to light reflected from, emitted from, or passing through the object. Preferably the sensor further comprises means for forming the difference between the sum of the outputs of alternate transducers and the sum of the outputs of the remaining transducers. The sensor may comprise 4n transducers, where n is an integer greater than 1, and the discriminating means may comprise second means for forming the difference between the sum of the outputs of each (4i-3)th transducer (where i=1 to n) and the sum of the outputs of each (4j-1)th transducer (where j=1 to n), third means for forming the difference between the sum of the outputs of each (4k-2)th transducer (where k=1 to n) and the sum of the outputs of each 4 lth transducer (where l=1 to n), and a quadrature detector responsive to the outputs of the second and third difference forming means.

It is thus possible to provide an apparatus which detects relative movement but which is substantially insensitive to vibration or jitter between the sensor and the object.

In the absence of relative movement, the sensor produces substantially equal numbers of pulses corresponding to forward and reverse movement and these pulses substantially cancel each other out in the first difference forming means. Thus, the effects of vibration can be substantially eliminated so as to provide a reliable measurement of displacement or speed throughout the whole range of the apparatus down to zero. In practice, although such cancelling out of forward and reverse pulses occurs over an interval of time, there may be a low level of "jitter" which can, however, be ignored or may be suppressed if necessary.

The invention will be further described, by way of example, with reference to the accompanying drawings, in which:

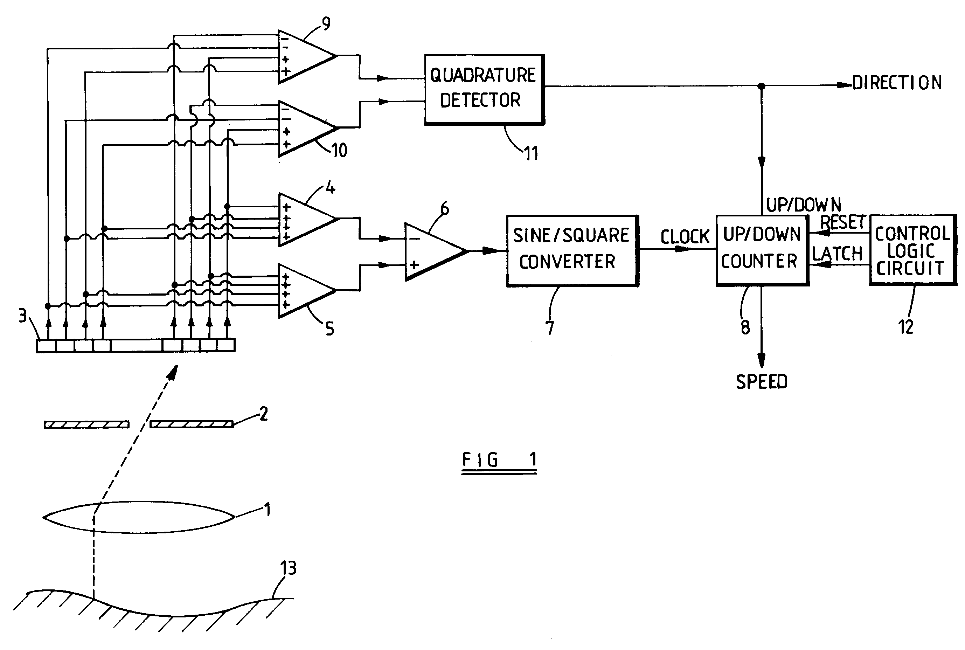

Figure 1 is a schematic diagram of a speed measuring apparatus constituting an embodiment of the present invention; and
Figures 2a and 2b are schematic diagrams of alternative embodiments to the up/down counter of Figure 1.

The apparatus comprises an optical system illustrated as a converging lens 1 co-operating with an optical slit 2 arranged at the prime focus of the lens 1. Light from the ground 13 is imaged by the optical system onto a linear array 3 of opto-electric transducers arranged with its axis parallel to the longitudinal axis of relative movement. For use as a speed over ground measuring apparatus for a vehicle, the axis of the array is arranged parallel to the longitudinal axis of the vehicle and, if necessary, a suitable source of light is provided so as to illuminate the ground 13 below the optical system.

In the embodiment shown, the number of transducers in the array 3 is divisible by four and, although eight transducers are shown, the array will normally comprise many more than eight transducers.

The outputs of alternate transducers of the array 3 are connected to the inputs of a first summing amplifier 4, which forms the sum of the output signals of these transducers. The remaining transducers, which alternate with the transducers connected to the summing amplifier 4, are connected to the inputs of a second summing amplifier 5. The outputs of the summing amplifiers 4 and 5 are connected to the differential inputs of a differential amplifier 6, which thus forms the difference between the sums of the output signals of the two sets of alternating transducers. The output signal of the differential amplifier 6 is of substantially sinusoidal shape and is supplied to the input of a sine/square converter 7, such as a Schmitt trigger, which converts the output signal into a pulse train whose repetition rate corresponds to the fundamental frequency of the output signal of the differential amplifier and is therefore proportional to speed over ground. The output of the converter 7 is connected to the clock input of an up/down counter 8.

A first differential amplifier 9 has inverting inputs connected to the outputs of the first transducer of each consecutive group of four transducers of the array 3. The amplifier 9 has non-inverting inputs connected to the outputs of the third transducers of the groups of four. A second differential amplifier 10 has inverting inputs connected to the outputs of the second transducers of the groups and non-inverting inputs connected to the outputs of the fourth transducers of the groups. Each of the differential amplifiers 9 and 10 and its associated transducers thus effectively forms a speed over ground sensor with these two speed over ground sensors being arranged in quadrature. The outputs of the differential amplifiers 9 and 10 are connected to the inputs of a quadrature detector 11, which produces a binary one bit signal whose level indicates whether the vehicle is moving in a forward or reverse direction with respect to the ground 13.

The counter 8 has an up/down control input which is connected to receive the direction signal from the quadrature detector 11. The counter also has reset and latch inputs connected to a control logic circuit 12, for instance comprising a clock and a plurality of gates arranged to provide a latch signal to the latch input of the counter 8 at regular intervals for latching the current count to a speed output of the counter, followed by a reset signal for resetting the counter to an initial count. In the case of a counter which underflows when counting down from 0, the counter may be reset to half its capacity. In the case of a counter which counts up from 0 when counting down and provides a separate indication of polarity, the counter is reset to 0.

In use, light reflected from the ground 13 is imaged by the converging lens 1 and the slit 2 onto the linear array 3 of opto-electric transducers. The summing amplifiers 4 and 5 and the differential amplifier 6 produce a generally sinusoidal signal whose frequency is proportional to the speed over ground of the vehicle in accordance with a constant of proportionality determined by the optical system and the pitch of the transducers of the array 3. The converter 7 converts the output signal of the differential amplifier 6 into a pulse signal suitable for counting by the counter 8.

The differential amplifiers 9 and 10 and the quadrature detector 11 provide a signal to the up/down input of the counter 8 so as to control its direction of counting of the pulses received at its clock input. For continuous forward movement, the detector 11 supplies a signal which causes the counter 8 to count up continuously the pulses received from the converter 7 for a period determined by the control logic circuit 12. At the end of this period, the circuit 12 supplies a latch signal which causes the counter 8 to hold its count at its output so as to provide a measure of speed over ground. The circuit 12 then resets the counter 8, and the cycle of operation continues.

For continuous reverse movement, the detector 11 supplies a signal causing the counter 8 to count down continuously so as to provide a measure of speed in the reverse direction. The speed and direction signals may be used for any suitable purpose, for instance to provide a display of speed to a driver of the vehicle or for use in other vehicle systems such as anti-lock brake systems and traction control systems.

When the vehicle is stationary, it may be subjected to vibration in the longitudinal direction, for instance caused by the continuous operation of an internal combustion engine. This vibration causes small rapid movements of the sensor which alternate in the forward and reverse directions, so that the converter 7 produces pulses of unpredictable repetition rate despite the fact that the vehicle is stationary with respect to the ground 13.

The vibration causes the quadrature detector 11 to produce an output signal which alternates between its two values in accordance with the vibration, so that the counter 8 alternately counts up and counts down the pulses from the converter 7. The pulses which correspond to the small forward and reverse movements caused by vibration of the vehicle in the longitudinal direction thus cancel out in the counter 8 so that the counter provides a reliable indication of zero or substantially zero relative speed. In practice, the least significant digit of the counter 8 may be subjected to a low level of jitter but, as this will correspond to a very low speed value, it may be ignored. However, should this be a problem, the least significant digit may be suppressed from the output of the counter 8.

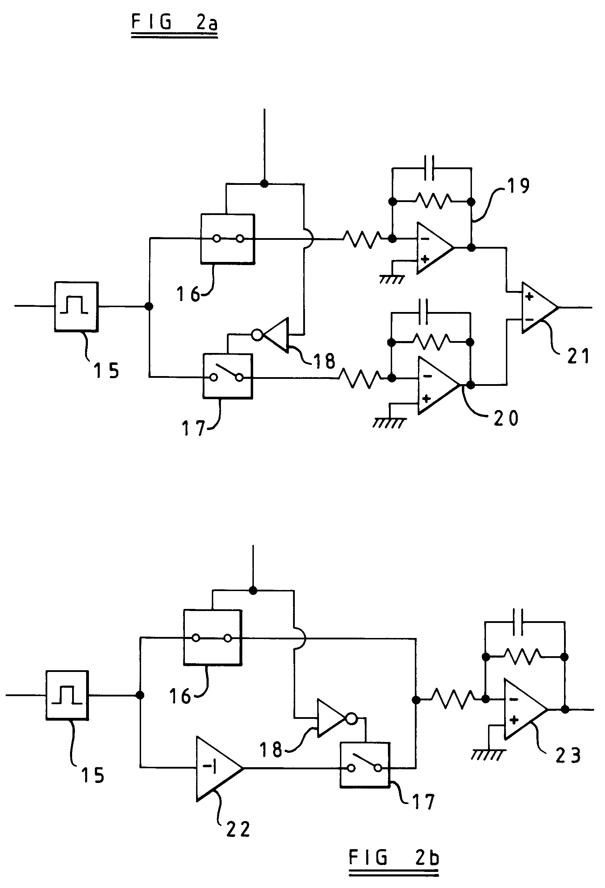

As shown in Figures 2a and 2b, the up/down counter 8 and the control logic circuit 12 may be replaced by analogue circuits. As shown in Figure 2a, the output of the sine/square converter is supplied to an input of a monostable 15. An output of the monstable is provided to first and second integrators, indicated generally as 19 and 20, respectively, via first and second gates 16 and 17, respectively. The gates 16 and 17 are controlled by the output of the quadrature detector 11. An inverter 18 is provided in a control line of the second gate 17 so that the first gate is open when the second gate is closed and vice versa.

Thus one of the integrators 19 and 20 only receives pulses from the monstable 15 during periods of forward movement and the other integrator only receives the output of the monostable 15 during periods of reverse movement. A subtractor 21 forms the difference between the outputs of the integrators 19 and 20. The polarity of the output of the subtractor indicates the direction of movement and the magnitude indicates the speed of the movement.

In an alternative arrangement, an inverting amplifier 22 is provided between the output of the monstable 15 and the input of the second gate 17, as shown in Figure 2b. The inverting amplifier 22 inverts the polarity of the pulses from the monstable. The outputs of the first and second gates 16 and 17 are provided to the input of a single integrator, indicated generally as 23. The polarity of an output of the integrator 23 indicates the direction of movement and the magnitude thereof indicates speed.

It is thus possible to provide a speed over ground measuring apparatus which is substantially unaffected by vehicle vibration when the vehicle is stationary. The apparatus may therefore be used for determining vehicle speed without any further precautions being necessary. Thus, an accurate speed indication throughout the speed range down to zero can be given to a driver of the vehicle. Further, anti-lock brake systems and traction control systems operate correctly when the vehicle is stationary.

Various modifications may be made within the scope of the invention. For instance, the up/down counter 8 may be replaced by two up counters, one of which is enabled by a "forward" signal from the quadrature detector 11 and the other by a "reverse" signal. The speed or displacement may then be determined by a subtracter for forming the difference between the contents of the counters.

Also, the output of the converter 7 may be used to gate the supply of clock pulses to a counter so as to provide a measure of period. The output of the converter may then be supplied to reciprocal-forming circuit to provide a measure of frequency. The counter 8 and control logic circuit 12 may be replaced by an adder/subtractor controlled by the detector 11 and periodically reset to provide a measure of speed. By using relatively high frequency clock pulses, the resolution of speed measurement can be increased, particularly for relatively low speeds.

## Claims

1. An apparatus for detecting movement, comprising a sensor (1-7) for providing a pulse for each increment of movement of the sensor (1-7) relative to an object (13), characterised by means (9-11) for discriminating between forward and reverse movement of the sensor (1-7) relative to the object (13), and first means (8) for forming the difference between the number of pulses from the sensor corresponding to forward movement and the number of pulses from the sensor corresponding to reverse movement.

2. An apparatus as claimed in Claim 1, for measuring displacement of the sensor (1-7) relative to the object (13), characterised in that the first means (8) is arranged to form continuously the difference between the numbers of forward and reverse pulses.

3. An apparatus as claimed in Claim 1 or 2, for measuring the speed of the sensor (1-7) relative to the object (13), characterised by frequency measuring means (8, 12) for measuring the frequency of the output of the first means (8).

4. An apparatus as claimed in any one of the preceding claims, characterised in that the first means (8) comprises an up/down counter for counting pulses from the sensor in a direction determined by the discriminating means (9-11).

5. An apparatus as claimed in Claim 4, characterised by means (12) for periodically resetting the up/down counter (8).

6. An apparatus as claimed in any one of Claims 1 to 3, characterised in that the first means (8) comprises a monstable (15) arranged to receive pulses from the sensor (1-7) and an integrator (19, 20, 21 and 23) for integrating output pulses of the monostable (15) in a sense determined by the discriminating means (9-11).

7. An apparatus as claimed in Claim 6, characterised in that the integrator (19, 20, 21) comprises a first integrator (19) arranged to integrate monostable output pulses corresponding to forward movement, a second integrator (20) arranged to integrate monostable output pulses corresponding to reverse movement, and a subtractor (21) for forming a difference between outputs of the first and second integrators (19, 20).

8. An apparatus as claimed in Claim 6, characterised by means (16-18, 22) for controlling the polarity of the monostable output pulses in response to an output of the discriminating means (9-11).

9. An apparatus as claimed in any one of the preceding claims, characterised in that the sensor (1-7) comprises a one dimensional array of transducers (3) sensitive to energy received from the object (13).

10. An apparatus as claimed in Claim 9, characterised in that the transducers (3) are opto-electric transducers.

11. An apparatus as claimed in Claim 9 or 10, characterised in that the sensor (1-7) comprises means (4-6) for forming the difference between the sum of the outputs of alternate transducers and the sum of the outputs of the remaining transducers.

12. An apparatus as claimed in any one of Claims 9 to 11, characterised in that the sensor (1-7) comprises 4n transducers (3), where n is an integer greater than one, and the discriminating means (9-11) comprises second means (9) for forming the difference between the sum of the outputs of each (4i-3)th transducer (where i=1 to n) and the sum of the outputs of each (4j-1)th transducer (where j=1 to n), third means (10) for forming the difference between the sum of the outputs of each (4k-2)th transducer (where k=1 to n) and the sum of the outputs of each (4l)th transducer (where l=1 to n) and a quadrature detector (11) responsive to the outputs of the second and third difference forming means.

13. An apparatus as claimed in any one of the preceding claims, characterised in that the sensor (1-7) comprises a linear sensor (3) responsive to translational movement relative to the object (13).

14. An apparatus as claimed in any one of Claims 1 to 12, characterised in that the sensor (1-7) comprises a curved sensor (3) sensitive to rotary motion relative to the object (13).
